# EUROPEAN PATENT APPLICATION

(11) **EP 2 402 231 A2**
(43) Date of publication of application: **04.01.2012**
(21) Application number: 10380113.0
(22) Date of filing: 31.08.2010
(51) Int. Cl.: B62B 7/08

(54) **Foldable chassis for baby pushchairs**

(30) Priority: 04.07.2010 ES 201030309 U
(71) Applicant: Jané S.A., 08184 Palau Solita I Plegamans (ES)
(72) Inventor: Jane Santamaria, Manuel, 08184 Palau Solità I Plegamans (Barcelona) (ES)
(74) Representative: Morgades y Manonelles, Juan Antonio

(57) **Abstract**

The purpose of this invention is a foldable chassis for baby pushchairs presenting a highly simplified structure, light and folding to a very compact size. This frame has a U-shaped handlebar (1) and front (8) and rear (9) wheels and is characterised in that the handlebar (1) and the wheels (8,9) are coupled to a frame that has a crosspiece (10) with a core (11) comprising the supports of the front and rear wheels, and on whose ends the sides of the handlebar are fitted. This core (11) comprises a fixed part (12), which is joined to the rear wheel support (9), and a rotating part (13) that is joined to the front wheel support (8), the handlebar sides being articulated to the ends of the crosspiece. The rotating part of the core and the articulated coupling of the handlebar sides to the ends of the crosspiece comprise the means for locking and unlocking it.

## Description

### OBJECT OF THE INVENTION

Foldable chassis for baby pushchairs

### BACKGROUND OF THE INVENTION

There are many models of foldable chassis for baby pushchairs, which generally present a very complex structure and when folded are bulky with the drawbacks that this represents, for instance for putting it in the car boot in of an average car, with the additional problem of its considerable weight.

### SUMMARY OF THE INVENTION

The purpose of this invention is a foldable chassis for baby pushchairs presenting a highly simplified structure, light and folding to a very compact size.

This frame has a U-shaped handlebar and front and rear wheels and is characterised in that the handlebar and the wheels are coupled to a frame that has a crosspiece with a core comprising the supports of the front and rear wheels, and on whose ends the sides of the handlebar are fitted.

This core comprises a fixed part, which is joined to the rear wheel support, and a rotating part that is joined to the front wheel support, the handlebar sides being articulated to the ends of the crosspiece.

The rotating part of the core and the articulated coupling of the handlebar sides to the ends of the crosspiece, comprise the means for locking and unlocking it.

These and other characterising features will be best made apparent by the following detailed description whose understanding will be made easier by the accompanying two sheets of drawings showing a practical embodiment being cited only by way of example not limiting the scope of the present invention.

### DESCRIPTION OF THE DRAWINGS

In the drawings:

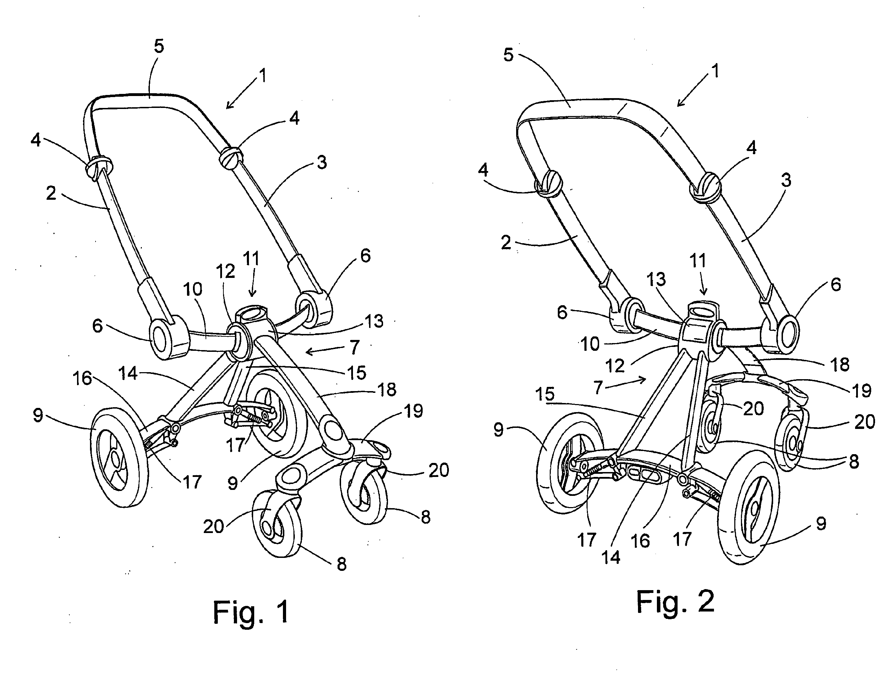

Figures 1 and 2 represent the foldable chassis purpose of the invention in front and rear perspective views, respectively,

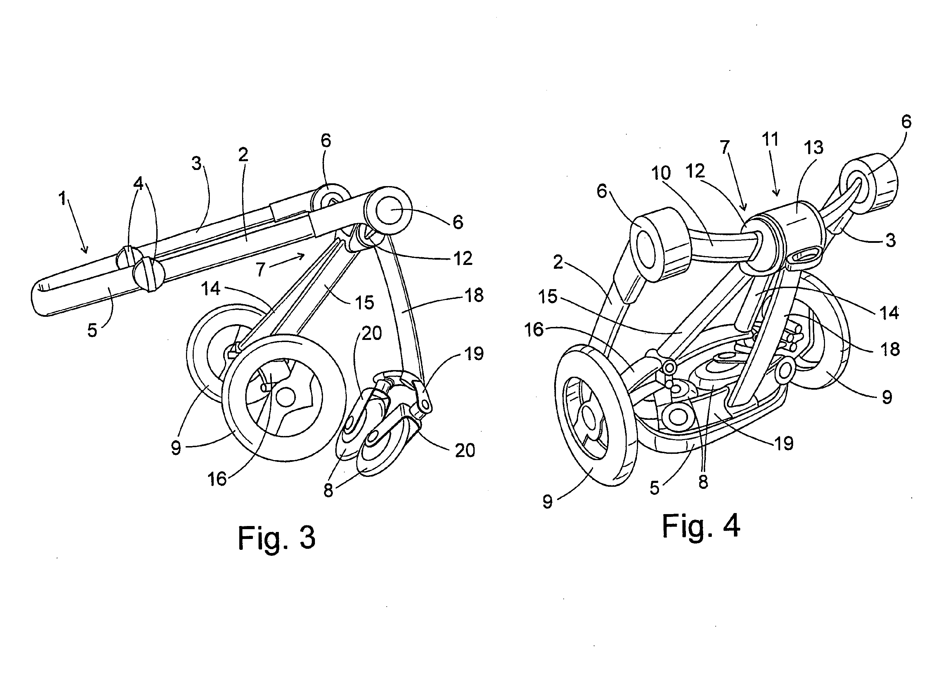

Figure 3 is a perspective view of the frame in semi-folded state, and
Figure 4 is a perspective view of the frame totally folded.

### DETAILED DESCRIPTION

According to the drawings this foldable chassis for baby pushchairs comprises a U-shaped handlebar (1) with sides (2 and 3) joined by an articulation (4) to its handgrip (5) and at its ends it is articulated (6) to a frame (7) holding the front (8) and rear wheels (9).

This frame (7) has an curved crosspiece (10) comprising a centre core (11) formed by a fixed part (12) and a rotating part (13), the fixed part being joined to the rear wheel support (9) formed by two divergent arms (14 and 15) that are joined to an curved cross member (16) from the bottom, which holds the rear wheels (9) and the suspension (17). The rotating part (13) of the core is joined to the front wheel support (8) formed by a curved arm (18) that at its bottom part is joined to an curved cross member (19) holding rotating forks (20) onto which the self-steering front wheels (8) are fitted.

The core (11) and the articulated coupling (6) of the handlebar sides to the ends of the crosspiece, comprise the means for locking and unlocking it, with the aim of facilitating and ensuring the folding and unfolding of the frame.

This frame will be completed with supports suitable for the fitting of the child's seat, and with the characteristic accessories of baby pushchairs.

The invention can within its essentiality be put into practice in other embodiments differing only in detail from the one having been described above only by way of example, said other embodiments also falling within the scope of the protection being claimed. This foldable chassis for baby pushchairs may thus be manufactured in any shape and size, with the most suitable means and materials and with the most convenient accessories, and the components may be replaced by others that are technically equivalent, as all of this is contained within the spirit of the claims.

## Claims

1. Foldable chassis for baby pushchairs, comprising a U-shaped handlebar and front and rear wheels, **characterised in that** the handlebar and the wheels are coupled to a frame that has a crosspiece with a core comprising the supports of the front and rear wheels, and on whose ends the sides of the handlebar are fitted.

2. Foldable chassis for baby pushchairs, according to claim 1, **characterised in that** the core comprises a fixed part, which is joined to the rear wheel support, and a rotating part that is joined to the front wheel support.

3. Foldable chassis for baby pushchairs, according to claim 1, **characterised in that** the handlebar sides is articulated to the ends of the crosspiece.

4. Foldable chassis for baby pushchairs, according to claims 2 and 3, **characterised in that** the rotating part of the core and the articulated coupling of the handlebar sides to the ends of the crosspiece, comprise the means for locking and unlocking it.

5. Foldable chassis for baby pushchairs, according to claim 1, **characterised in that** the front and rear wheels supports comprise at least an arm which is joined at the bottom to a cross member holding the wheels at its ends.

6. Foldable chassis for baby pushchairs, according to claim 1, **characterised in that** the handlebar has articulations on its sides.
